# EUROPEAN PATENT APPLICATION

(11) **EP 2 243 654 A1**
(43) Date of publication of application: **27.10.2010**
(21) Application number: 10156487.0
(22) Date of filing: 15.03.2010
(51) Int. Cl.: B60K 31/00, B62D 15/02, B60W 30/08

(54) **Driving support system and program**

(30) Priority: 13.04.2009 JP 2009097346
(71) Applicant: AISIN AW CO., LTD., Anjo-shi, Aichi 444-1192 (JP)
(72) Inventor: Nakao, Koichi, Anjo-shi Aichi 444-1192 (JP); Sugiura, Hiroaki, Anjo-shi Aichi 444-1192 (JP); Orui, Takashi, Anjo-shi Aichi 444-1192 (JP); Kanayama, Hiroyuki, Anjo-shi Aichi 444-1192 (JP); Tojo, Takayuki, Anjo-shi Aichi 444-1192 (JP)
(74) Representative: TBK-Patent

(57) **Abstract**

A driving support system comprises an operation detecting unit detecting an operation of a vehicle which is determined as dangerous driving during a normal time; an avoidance determining unit determining whether or not the operation of the vehicle detected by the operation detecting unit is an avoidance operation to avoid a factor to be avoided in the vicinity of the vehicle; an information obtaining unit obtaining information related to an operation accompanying the operation of the vehicle when the operation of the vehicle is determined as the avoidance operation; an avoidance operation determining unit determining whether the operation of the vehicle is the appropriate avoidance operation or not based on the information related to the operation accompanying the operation of the vehicle; and a determining unit determining that the operation of the vehicle is not dangerous driving when the operation of the vehicle is determined as the appropriate avoidance operation.

## Description

### BACKGROUND OF THE INVENTION

The present invention relates to a driving support system and method and a program for evaluating driving to support a driver in driving safely.

### Description of the Related Art

Conventionally, there has been known a system which evaluates whether a vehicle operation performed by a driver while traveling is appropriate. For example, in a technology described in Japanese Patent Application Publication No. JP-A-2007-108926, traveling information (traveling speed, degree of acceleration/deceleration, traction information, steering angle information, traveling position on a roadway, steering operation, acceleration operation, brake operation, shift operation, blinker operation, and so on) is stored while traveling, and after traveling, whether the driving operation is dangerous driving or not is evaluated by comparing the driving operation with the ideal driving operation based on traveling information.

### SUMMARY OF THE INVENTION

However, in the technology described in Japanese Patent Application Publication No. JP-A-2007-108926, since the driving operation is determined based on fixed, constant references (ideal driving operations), even an appropriate driving operation, such as avoiding an obstacle on the road, is determined as dangerous driving when the different operation from the ideal driving operations set in advance is performed. Thus, there is a possibility of failing in appropriate evaluation. In short, it has not been possible to evaluate driving operations considering the situation surrounding the vehicle.
The present invention is made to solve the above-described problems, and it is an object of the present invention to provide a driving support system and method and a program for appropriately evaluating driving considering the situation surrounding the vehicle.

According to a first aspect of the present invention, there is provided a driving support system as defined in claim 1. A driving support system according to a first aspect includes: an operation detecting unit adapted to detect an operation of a vehicle which is determined as dangerous driving during a normal time; an avoidance determining unit adapted to determine whether or not the operation of the vehicle detected by the operation detecting unit is an avoidance operation to avoid a factor to be avoided in the vicinity of the vehicle; an information obtaining unit adapted to obtain information related to an operation accompanying the operation of the vehicle when the operation of the vehicle is determined as the avoidance operation; an avoidance operation determining unit adapted to determine whether the operation of the vehicle is an appropriate avoidance operation or not based on the information related to the operation accompanying the operation of the vehicle; and a determining unit adapted to determine that the operation of the vehicle is not dangerous driving when the operation of the vehicle is determined as the appropriate avoidance operation.

With such a structure, an operation that is determined as dangerous driving during a normal time is determined not as dangerous driving when the operation is the appropriate avoidance operation performed for avoiding the factor to be avoided in the vicinity of the vehicle. It is thus possible to appropriately evaluate driving considering the situation surrounding the vehicle. Therefore, by giving the driver feedback on appropriate driving evaluation, it is possible to assist the driver in improvement of driving skills.

In the driving support system according to a second aspect, the operation of the vehicle determined as dangerous driving during a normal time is an operation to cross a road marking line prohibiting deviation from a lane. The road marking line prohibiting deviation from a lane refers to a lane border line prohibiting a lane change and a center line prohibiting crossing into the opposite lane for overtaking.
Accordingly, even when the operation to cross the road marking line prohibiting deviation from the lane that is determined as dangerous driving during a normal time is performed, it is determined not as dangerous driving when it is an appropriate avoidance operation performed for avoiding a factor to be avoided in the vicinity of the vehicle. It is thus possible to appropriately evaluate driving considering the situation surrounding the vehicle.

In the driving support system according to a third aspect, the information related to the operation accompanying the operation of the vehicle is information related to a traveling trace of the vehicle in a predetermined section before and after the operation to cross the road marking line is detected. Further, the avoidance operation determining unit adapted to determine the operation of the vehicle as the appropriate avoidance operation when the traveling trace indicated by the information related to the traveling trace of the vehicle matches a road shape of the predetermined section.
Accordingly, for example, in the case where a temporary road or the like is set to avoid a construction site or the like on the lane and the road itself is modified, it is possible to appropriately evaluate driving considering the situation surrounding the vehicle.

In the driving support system according to a fourth aspect, the information related to the operation accompanying the operation of the vehicle is information related to a direction indicator when the operation to cross the road marking line is detected. Further, the avoidance operation determining unit adapted to determine that the operation of the vehicle is the appropriate avoidance operation when the information related to the direction indicator indicates that the direction indicator is turned on. Accordingly, when the road marking line is crossed with the direction indicator being turned on, the operation of the vehicle is determined as the appropriate avoidance operation. It is thus possible to appropriately evaluate driving considering the situation surrounding the vehicle.

In a driving support system according to a fifth aspect, the information related to the operation accompanying the operation of the vehicle is information related to a speed of the vehicle when the operation to cross the road marking line is detected. Further, the avoidance operation determining unit adapted to determine that the operation of the vehicle is the appropriate avoidance operation when a value indicated by the information related to the speed of the vehicle satisfies a predetermined reference. The information related to the speed of the vehicle includes not only information indicating the speed of the vehicle itself, but information indicating acceleration/deceleration, information indicating a change ratio of vehicle speed, and the like. The case where the value indicated by the information related to the speed of the vehicle satisfies a predetermined reference refers to the case where driving at an appropriate speed is performed, and this includes the case where the vehicle is traveling at a predetermined speed or lower, the case where rapid acceleration or rapid deceleration is not performed, and the like. Accordingly, when driving is performed at an appropriate speed, the operation of the vehicle is determined as the appropriate avoidance operation. It is thus possible to appropriately evaluate driving considering the situation surrounding the vehicle.
According to a further aspect of the present invention, there is provided a method as defined in claim 7. A method according to a further aspect comprises detecting an operation of a vehicle which is determined as dangerous driving during a normal time; determining whether or not the operation of the vehicle detected by the operation detecting unit is an avoidance operation to avoid a factor to be avoided in the vicinity of the vehicle; obtaining information related to an operation accompanying the operation of the vehicle when the operation of the vehicle is determined as the avoidance operation; determining whether the operation of the vehicle is the appropriate avoidance operation or not based on the information related to the operation accompanying the operation of the vehicle; and determining that the operation of the vehicle is not dangerous driving when the operation of the vehicle is determined as the appropriate avoidance operation.

In the foregoing, the present invention has been described as an on-vehicle navigation device and method, but the present invention may also be achieved as a program as described below.
According to a further aspect of the present invention, there is provided a program as defined in claim 6.
Specifically, it is a program causing a computer to function as: an operation detecting unit adapted to detect an operation of a vehicle which is determined as dangerous driving during a normal time; an avoidance determining unit adapted to determine whether or not the operation of the vehicle detected by the operation detecting unit is an avoidance operation to avoid a factor to be avoided in the vicinity of the vehicle; an information obtaining unit adapted to obtain information related to an operation accompanying the operation of the vehicle when the operation of the vehicle is determined as the avoidance operation; an avoidance operation determining unit adapted to determine whether the operation of the vehicle is the appropriate avoidance operation or not based on the information related to the operation accompanying the operation of the vehicle; and a determining unit adapted to determine that the operation of the vehicle is not dangerous driving when the operation of the vehicle is determined as the appropriate avoidance operation. By implementing such a program, effects similar to those described above are achieved.
According to still further aspect of the present invention, there is provided a computer program product as defined in claims 8 to 10.

### BRIEF DESCRIPTION OF THE DRAWINGS

FIG. 1 is a block diagram showing a structure of a driving support system of an embodiment of the present invention;
FIG. 2 is a flowchart showing driving evaluation processing of the embodiment of the present invention;
FIG. 3 is a flowchart showing driving evaluation processing of the embodiment of the present invention;
FIG. 4 is an explanatory view describing a specific example of the driving evaluation processing of the embodiment of the present invention; and
FIG. 5 is an explanatory view describing a specific example of the driving evaluation processing of the embodiment of the present invention.

### DETAILED DESCRIPTION OF THE EMBODIMENTS

Hereinafter, a driving support system according to the present invention will be described based on the drawings.

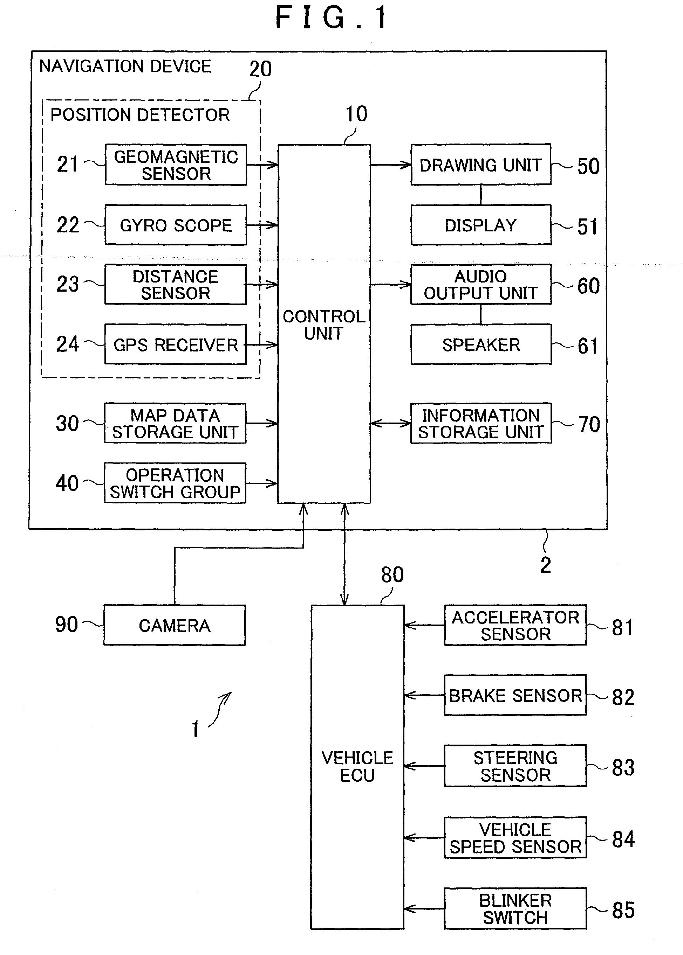

FIG. 1 is a block diagram showing an overall structure of a driving support system 1 according to an embodiment. The driving support system 1 is formed of a navigation device 2, a vehicle ECU 80, a camera 90, and so on.

The navigation device 2 is structured with a control unit 10 being a main component, and includes a position detector 20, a map data storage unit 30, an operation switch group 40, a drawing unit 50, an audio output unit 60, an information storage unit 70, and so on, which are connected to the control unit 10.
The control unit 10 is formed as a normal computer, and in this control unit, there are provided a CPU, a ROM, an I/O, a bus line connecting these components, and so on.

The position detector 20 is for detecting position information related to the current position of a vehicle, and has a geomagnetic sensor 21, a gyro scope 22, a distance sensor 23, a global positioning system (GPS) receiver 24 receiving radio waves from a satellite, and so on, all of which are publicly known. These components 21 to 24 have respective errors of different natures, and thus are used in a manner complementing each other. The position information is detected as coordinate information.

The map data storage unit 30 is a storage device implemented as a hard disk drive (HDD) for example. Although the HDD is used in this embodiment, note that any other device such as a memory card may be used. The map data storage unit 30 stores what is called map matching data for improving the accuracy of detecting a vehicle position and map data for a route search and for guiding through the found route.

The operation switch group 40 is formed of a touch switch integrated with a display 51 or mechanical switches, a remote controller, and/or the like, and is used for various input operations.
The display 51 is connected to the drawing unit 50. The display switch 51 is a color display using liquid crystal or a CRT. Information is displayed via this display 51.

A speaker 61 is connected to an audio output unit 60, and guidance by voice is performed via this speaker 61.
The information storage unit 70 is for storing information related to an operation of the vehicle obtained from the vehicle ECU 80 and the camera 90, and is formed of an HDD similar to the map data storage unit 30. As a matter of course, any other media such as a memory card may be used. Further, the storage unit may be the same HDD as the map data storage unit 30. The information related to an operation of the vehicle includes position information of the vehicle and time information related to the time when the position information is detected, information related to the amount of depressing an accelerator pedal, information related to the amount of depressing a brake pedal, information related to the rotation angle of a steering wheel, information related to a speed of the vehicle, information related to operation status of a direction indicator, video information of capturing surroundings of the vehicle, information indicating that the vehicle crossed a road marking line prohibiting deviation from the lane, and so on. Note that the information related to the operation of the vehicle is constantly obtained while traveling (at every 100 ms for example) and stored in association with the position information and the time information.

The vehicle ECU 80 controls operations of an engine, a transmission, an accelerator, a brake, and so on. Similarly to the control unit 10, the vehicle ECU 80 is formed as a normal computer, and includes a CPU, a ROM, an I/O, a bus line connecting these components, and so on. An accelerator sensor 81 detecting the amount of depressing the accelerator pedal, a brake sensor 82 detecting the amount of depressing the brake pedal, a steering sensor 83 detecting the rotation angle of the steering wheel, a vehicle speed sensor 84 detecting the speed of the vehicle, a blinker switch 85, and so on are connected to the vehicle ECU 80.
The camera 90 is formed using a solid state imaging sensor such as a CCD for example, and is structured to be capable of imaging all directions outside the vehicle.

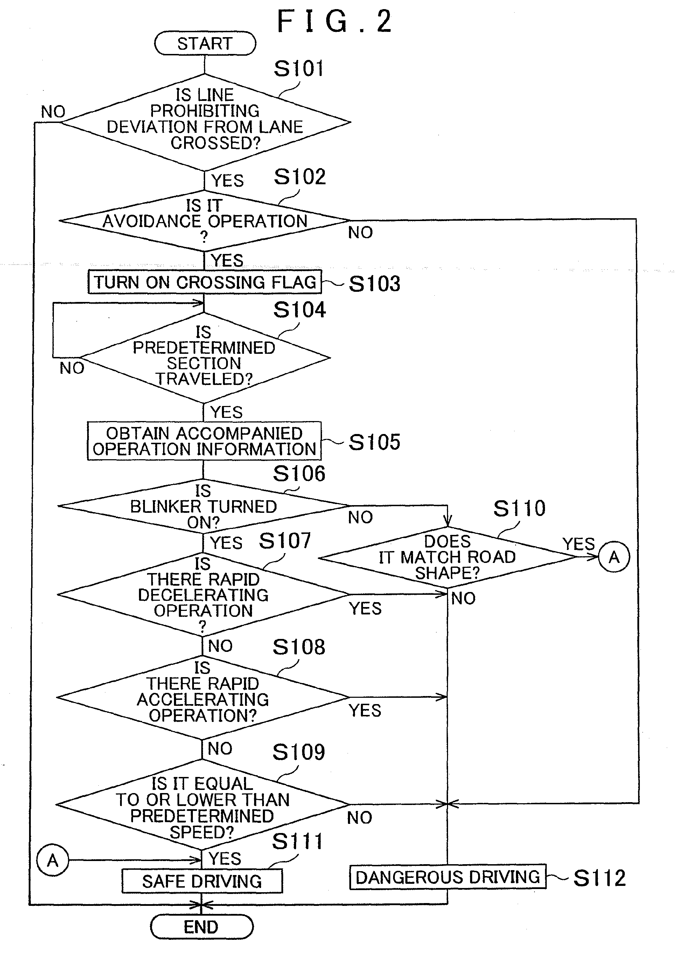

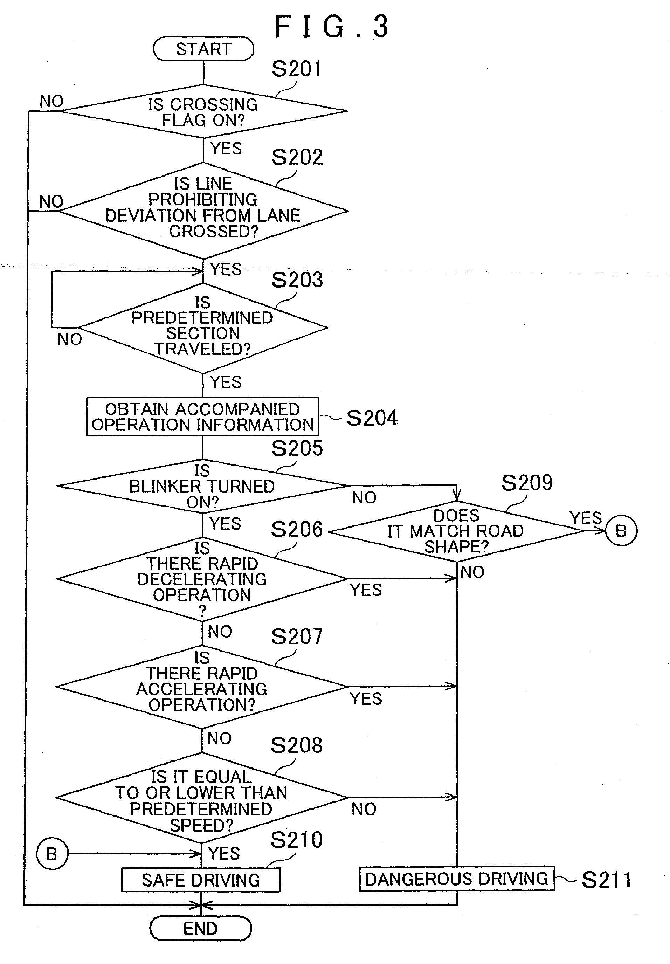

This embodiment is **characterized in that** driving operation is evaluated considering the surrounding situation. Here, based on flowcharts shown in FIG. 2 and FIG. 3, driving support processing will be described. In addition, this processing is performed at predetermined intervals, for example at every 100 msec, while the vehicle is traveling.

In first step S101 (hereinafter, "step" is omitted and is just denoted by "S"), it is determined whether a road marking line prohibiting deviation from a lane is crossed or not. The road marking line prohibiting deviation from the lane refers to a lane border line prohibiting a lane change and a center line prohibiting crossing into the opposite lane for overtaking. This road marking line is drawn on a road surface by a yellow line. In this embodiment, an operation of the vehicle to be determined as dangerous driving during a normal time is an operation to cross the road marking line prohibiting deviation from the lane. Further, determination as to whether the road marking line prohibiting deviation from the lane is crossed or not is performed such that image recognition is performed with respect to an image indicated by video information obtained by the camera 90, and it is determined that "the road marking line prohibiting deviation from the lane is crossed" when the presence of the road marking line is recognized at a predetermined position in the image (for example, a center position of an image when the camera 90 is placed at the center on a rear side of the vehicle). When the road marking line prohibiting deviation from the lane is not crossed (S101: NO), processing in S102 and thereafter is not performed. When the road marking line prohibiting deviation from the lane is crossed (S101: YES), information indicating that the road marking line prohibiting deviation from the lane is crossed is stored in the information storage unit 70, and the system proceeds to S102.

In S102, it is determined whether or not the operation to cross the road marking line prohibiting deviation from the lane detected in S101 is an avoidance operation for avoiding a factor to be avoided. The determination as to whether it is the avoidance operation is made based on whether or not there was a factor to be avoided in the vicinity of the vehicle. The vicinity of the vehicle is, specifically, a lane which the vehicle was traveling before crossing the road marking line prohibiting deviation from the lane and within a predetermined distance (50 meters for example) ahead of the point of crossing the road marking line prohibiting deviation from the lane. Further, the factor to be avoided is an obstacle on the road (a vehicle parked on street, a crashed vehicle, a construction fence or sign, a fallen object, or the like). The factor to be avoided is detected based on image information captured by the camera 90. When the operation to cross the road marking line prohibiting deviation from the lane is not the avoidance operation (S102: NO), that is, there is no factor to be avoided in the vicinity of the vehicle, the system proceeds to S 112. When the operation to cross the road marking line prohibiting deviation from the lane is the avoidance operation (S102: YES), that is, there is a factor to be avoided in the vicinity of the vehicle, the system proceeds to S103.
In S103, a crossing flag indicating that the road marking line prohibiting deviation from the lane is crossed for avoiding the factor to be avoided is set.

In S104, it is determined whether a predetermined section before and after the operation to cross the road marking line prohibiting deviation from the lane is detected is traveled or not. The "predetermined section before and after the operation to cross the road marking line is detected" in this embodiment is a temporal range including a predetermined time before and after (for example 10 seconds before and after) a time point at which the operation to cross the road marking line prohibiting deviation from the lane is detected, but may be a range of distance including a predetermined distance before and after (for example 50 m before and after) a position at which the operation to cross the road marking line prohibiting deviation from the lane is detected. When the predetermined section is not traveled (S104: NO), this determination processing is repeated. When the predetermined section is traveled (S104: YES), the system proceeds to S105.

In S105, there is obtained information related to an operation accompanying the operation to cross the road marking line prohibiting deviation from the lane (hereinafter referred to as "accompanied operation information"). Here, first there is obtained information related to the operation of the vehicle when the operation to cross the road marking line prohibiting deviation from the lane is detected. Next, based on the obtained information related to the operation of the vehicle, there are created information related to a traveling trace of the vehicle within a predetermined section before and after the operation to cross the road marking line prohibiting deviation from the lane is detected (hereinafter referred to as "traveling trace information"), information related to the direction indicator when the operation to cross the road marking line prohibiting deviation from the lane is detected (hereinafter referred to as "direction indicator information"), and information related to the speed of the vehicle when the operation to cross the road marking line prohibiting deviation from the lane is detected (hereinafter referred to as "vehicle speed information"), which are included in the accompanied operation information. Note that "when the operation to cross the road marking line prohibiting deviation from the lane is detected" mentioned here is not limited to a time point when the operation to cross the road marking line prohibiting deviation from the lane is detected but includes a predetermined section before and after the above-described operation to cross the road marking line is detected.

In S106, based on the direction indicator information included in the accompanied operation information obtained in S105, it is determined whether or not the blinker indicating a direction to deviate from the lane is turned on a predetermined time (three seconds for example) before the operation to cross the road marking line prohibiting deviation from the lane is detected. When the blinker is not turned on (S106: NO), the system proceeds to S110. When the blinker is turned on (S106: YES), the system proceeds to S107. Note that the blinker corresponds to the "direction indicator".

In S107, it is determined whether a rapid decelerating operation is performed or not. Here, based on the vehicle speed information included in the accompanied operation information obtained in S105, it is determined that the rapid decelerating operation is performed when a speed reduction ratio is equal to a predetermined reference value or higher. Note that the speed reduction ratio corresponds to the "value indicated by information related to the vehicle speed". The speed reduction ratio being less than a predetermined reference value corresponds to "satisfying a predetermined reference". When the rapid decelerating operation is performed (S107: YES), the system proceeds to S112. When the rapid decelerating operation is not performed (S107: NO), the system proceeds to S108.

In S108, it is determined whether a rapid accelerating operation is performed or not. Here, based on the vehicle speed information included in the accompanied operation information obtained in S105, it is determined that the rapid accelerating operation is performed when a speed increase ratio is equal to a predetermined reference value or higher. Note that the speed increase ratio corresponds to the "value indicated by information related to the vehicle speed". The speed increase ratio being less than a predetermined reference value corresponds to "satisfying a predetermined reference". When the rapid accelerating operation is performed (S108: YES), the system proceeds to S112. When the rapid accelerating operation is not performed (S108: NO), the system proceeds to S109.

In S109, based on the vehicle speed information included in the accompanied operation information obtained in S105, it is determined whether or not the speed is equal to or lower than a predetermined speed. The predetermined speed is the speed limit of the road which the vehicle is traveling. Note that the value of the vehicle speed itself corresponds to the "value indicated by the information related to the speed of the vehicle", and the speed being equal to or lower than the speed limit corresponds to "satisfying a predetermined reference". When the speed is not equal to or lower than the speed limit (S109: NO), the system proceeds to S 112. When the speed is equal to or lower than the speed limit (S 109: YES), the system proceeds to S111.
Note that the determination in S107 to S109 in this embodiment corresponds to determination as to whether the value indicated by the information related to the speed of the vehicle satisfies the predetermined reference or not.

In S110, to which the system proceeds when the blinker indicating the direction to deviate from the lane is not turned on the predetermined time before the operation to cross the road marking line prohibiting deviation from the lane is detected (S106: NO), it is determined whether the traveling trace and the road shape match or not based on the traveling trace information included in the accompanied operation information obtained in S105. This determination assumes the case where a temporary road or the like is set to avoid a construction site or the like on the lane for example, and the road itself is modified. This is because, in such a case, it is not necessary to turn on the blinkers. The determination as to whether the traveling trace and the road shape match each other or not in this embodiment is made based on video information of the rear side of the vehicle that is captured by the camera 90. Specifically, when the traveling trace information is an image represented by video information within a predetermined section, it is determined that the "traveling trace and the road shape match each other" when lines recognized as indicating both ends defining the lane are constantly recognized within a predetermined range. When the traveling trace and the road shape do not match (S110: NO), the system proceeds to S 112. When the traveling trace and the road shape match each other (S110: YES), the system proceeds to S111. When the vehicle is traveling with gaps between the vehicle and the lines recognized as indicating the both ends defining the lane being in a constant range, for example in the range from 30 cm to 100 cm, it may be determined that the "traveling trace and the road shape match".

In S111, to which the system proceeds when the blinker is turned on the predetermined time before crossing the road marking line prohibiting deviation from the lane (S106: YES) and there are no rapid accelerating operation and rapid decelerating operation (S107: NO, S108: NO) and the vehicle is traveling at a predetermined speed or lower (S109: YES), as well as when the traveling trace and the road shape match each other (S110: YES), it is determined that the operation to cross the road marking line prohibiting deviation from the lane detected in S101 is an appropriate avoidance operation, and hence the operation of the vehicle is not dangerous driving, in other words, is safe driving.

In S112, to which the system proceeds when there is no factor to be avoided (S102: NO), when the rapid decelerating operation is performed and when the rapid accelerating operation is performed (S107: YES, S108: YES), when the vehicle is not traveling at the predetermined speed or lower (S109: NO), and when the traveling trace and the road shape do not match (S110: NO), it is determined that the operation to cross the road marking line prohibiting deviation from the lane detected in S101 is not an appropriate avoidance operation, and thus is determined as dangerous driving. In addition, in this embodiment, when it is determined as dangerous driving, a predetermined score is subtracted from a preset base score at the time of starting driving, so as to calculate a driving evaluation score.

Processing shown in FIG. 3 is for evaluating the operation of the vehicle when the vehicle returns to the original lane after the vehicle crossed the road marking line prohibiting deviation from the lane to avoid a factor to be avoided.
In S201, it is determined whether the crossing flag that can be set in S103 is set or not. When the crossing flag is not set (S201: NO), processing in S202 and thereafter is not performed. When the crossing flag is set (S201: YES), the system proceeds to S202.

In S202, it is determined whether the same road marking line prohibiting deviation from the lane as the one determined to be crossed in S101 is crossed again or not. Here, whether the road marking line prohibiting deviation from the lane is crossed again or not is determined based on the road shape, the steering angle, and video information of the rear side of the vehicle captured by the camera 90. That is, when the vehicle is traveling in a direction to return to the lane which the vehicle was traveling before crossing the road marking line prohibiting deviation from the lane in S101, image recognition is performed with respect to the image indicated by the video information obtained by the camera 90. When it is recognized that the road marking line exists at a predetermined position in the image (for example, the center position of the image when the camera 90 is place at the center of the rear side of the vehicle), it is determined that "the road marking line prohibiting deviation from the lane is crossed again". When it is determined that the road marking line prohibiting deviation from the lane is not crossed again (S202: NO), processing in S203 and thereafter is not performed. When it is determined that the road marking line prohibiting deviation from the lane is crossed again (S202: YES), the crossing flag is reset and the system proceeds to S203.

In S203, it is determined whether a predetermined section before and after the operation to cross the road marking line prohibiting deviation from the lane again is detected is traveled or not. The "predetermined section before and after the operation to cross the road marking line again is detected" is a temporal range including a predetermined time before and after (for example 10 seconds before and after) a time point at which the operation to cross the road marking line prohibiting deviation from the lane again is detected, but it may be a range of distance including a predetermined distance (for example 50 m) before and after a position at which the operation to cross the road marking line prohibiting deviation from the lane again is detected. When the predetermined section is not traveled (S203: NO), this determination processing is repeated. When the predetermined section is traveled (S203: YES), the system proceeds to S204.

In S204, the accompanied operation information related to an operation accompanying the operation to cross the road marking line prohibiting deviation from the lane again is obtained. Here, similarly to S105, there is obtained information related to the operation of the vehicle when the operation to cross the road marking line prohibiting deviation from the lane again is detected. Based on the obtained information related to the operation of the vehicle, there are created the traveling trace information, the direction indicator information, and the vehicle speed information, which are included in the accompanied operation information. Note that "when the operation to cross the road marking line prohibiting deviation from the lane again is detected" mentioned here is not limited to a time point when the operation to cross the road marking line prohibiting deviation from the lane again is detected but includes a predetermined section before and after the above-described operation to cross the road marking line again is detected.

In S205, based on the direction indicator information included in the accompanied operation information obtained in S204, it is determined whether or not the blinker indicating the direction to deviate from the lane is turned on when the operation to cross the road marking line prohibiting deviation from the lane again is detected. When the blinker is not turned on (S205: NO), the system proceeds to S209. When the blinker is turned on (S205: YES), the system proceeds to S206.

In S206, based on the vehicle speed information included in the accompanied operation information obtained in S204, it is determined whether a rapid decelerating operation is performed or not. Here, a determination similar to S107 is made. When the rapid decelerating operation is performed (S206: YES), the system proceeds to S211. When the rapid decelerating operation is not performed (S206: NO), the system proceeds to S207.

In S207, based on the vehicle speed information included in the accompanied operation information obtained in S204, it is determined whether a rapid acceleration is performed or not. Here, a determination similar to S108 is made. When the rapid acceleration is performed (S207: YES), the system proceeds to S211. When the rapid accelerating operation is not performed (S207: NO), the system proceeds to S208.

In S208, based on the vehicle speed information included in the accompanied operation information obtained in S204, it is determined whether the speed is equal to or lower than a predetermined speed. Here, a determination similar to S109 is made. When the speed is not equal to or lower than the predetermined speed (S208: NO), the system proceeds to S211. When the speed is equal to or lower than the predetermined speed (S208: YES), the system proceeds to S210.

In S209, to which the system proceeds when the blinker is not turned on when the operation to cross the road marking line prohibiting deviation from the lane again is detected (S205: NO), it is determined whether the traveling trace and the road shape match each other or not based on the traveling trace information included in the accompanied operation information obtained in S204. Here, a determination similar to S110 is made. When the traveling trace and the road shape do not match each other (S209: NO), the system proceeds to S211. When the traveling trace and the road shape match each other (S209: YES), the system proceeds to S210.

In S210, to which the system proceeds when the blinker is turned on when the operation to cross the road marking line prohibiting deviation from the lane again is detected (S205: YES) and there are no rapid decelerating operation and rapid accelerating operation (S206: NO, S207: NO) and the vehicle is traveling at the predetermined speed or lower (S208: YES), as well as when the raveling trace and the road shape match each other (S209: YES), it is determined that the operation to cross the road marking line prohibiting deviation from the lane again detected in S202 is an appropriate operation to return to the original lane after avoiding the factor to be avoided, and it is hence determined that the operation of the vehicle is not dangerous driving, in other words, is safe driving.

In S211, to which the system proceeds when the rapid decelerating operation is performed and when the rapid accelerating operation is performed (S206: YES, S207: YES), when the vehicle is not traveling at the predetermined speed or lower (S208: NO), and when the traveling trace and the road shape do not match each other (S209: NO), it is determined that the operation to cross the road marking line prohibiting deviation from the lane again detected in S202 is not an appropriate operation, and thus is determined as dangerous driving. Further, a predetermined score is subtracted from the preset base score at the time of starting driving, so as to calculate the driving evaluation score. When the driving evaluation score falls below the reference score when the driving is finished, warning information regarding that the driving evaluation score falls below the reference score is given via the display 51 and/or the speaker 61.

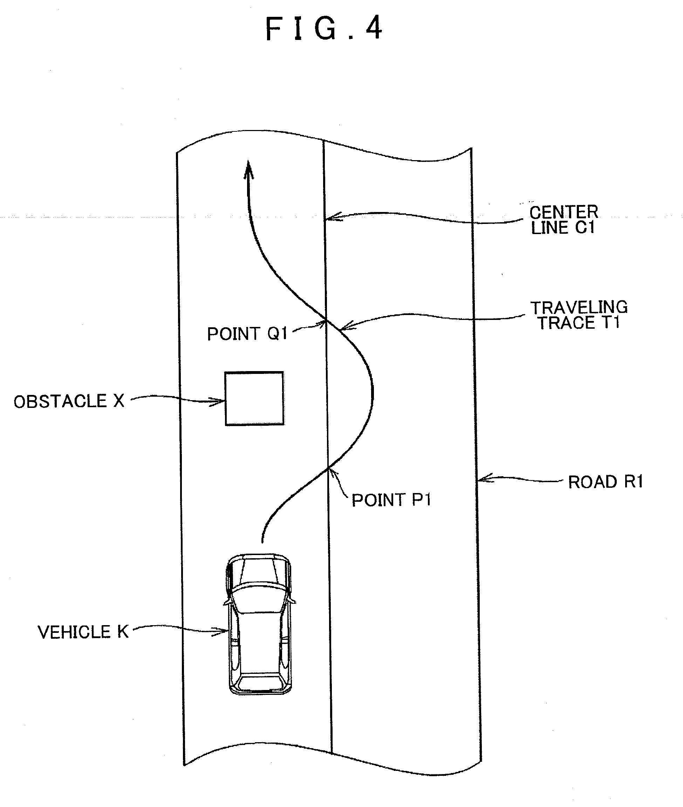

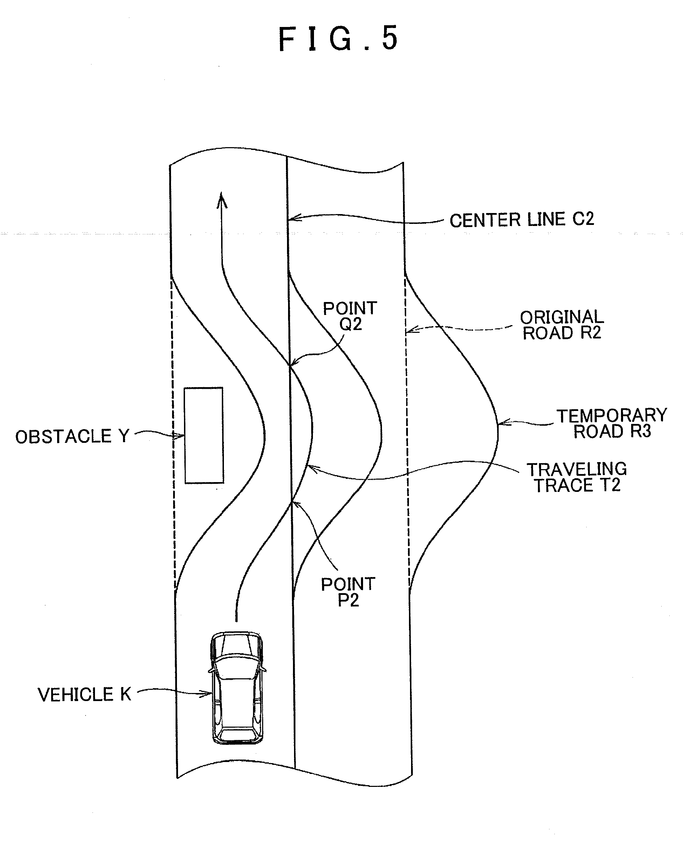

Here, a specific example of the driving support processing will be described based on FIG. 4 and FIG. 5.
As shown in FIG. 4, it is assumed that a vehicle K having the driving support system 1 is traveling a two-lane road R1 with a center line C1 drawn in yellow. The center line C1 drawn in yellow is a road marking line prohibiting crossing into the opposite lane for overtaking and corresponds to the "road marking line prohibiting deviation from the lane". On the lane of the road R1 which the vehicle K is traveling, there is an obstacle X. It is assumed that the traveling vehicle K crosses the center line C1 at a point P1 as shown by a traveling trace T1 so as to avoid the obstacle X, and thereafter crosses the center line C1 again at a point Q1. Note that the obstacle X here is the "factor to be avoided in the vicinity of the vehicle", and the operation to cross the center line C1 corresponds to the "operation of the vehicle determined as dangerous driving during a normal time".

The vehicle K crosses the center line C1 at the point P1 (S101: YES). At this time, since there is the obstacle X ahead on the lane which the vehicle K is traveling, the operation to cross the center line C1 is determined as an avoidance operation (S102: YES), and the crossing flag is set (S103). Further, when the vehicle passes a predetermined section before and after the operation to cross the center line C1 is detected (S104: YES), that is, 10 seconds elapse after the operation to cross the center line C1 is detected, there is obtained accompanied operation information related to the operation accompanying the operation to cross the center line C1 in a period from 10 seconds before crossing the center line C1 at the point P1 to 10 seconds after crossing the center line C1 (S105). It is assumed that, referring to the obtained accompanied operation information, the right blinker is turned on three seconds before passing the point P1 (S106: YES), the rapid accelerating operation and the rapid decelerating operation are not performed (S107: NO, S108: NO), and the vehicle is traveling at the predetermined speed or lower (S109: YES). In this case, the operation to cross the center line C 1 avoiding the obstacle X is determined as appropriate and hence as safe driving, and no score is subtracted (S111).

Further, in a state that the crossing flag is set (S201: YES), the vehicle K crosses the center line C1 again at the point Q1 (S202: YES). Further, when the vehicle passes the predetermined section before and after the operation to cross the center line C1 again is detected (S203: YES), that is, when 10 seconds elapse after the operation to cross the center line C 1 again is detected, there is obtained accompanied operation information related to the operation accompanying the operation to cross the center line C1 in the period from 10 seconds before crossing the center line C1 at the point Q1 to 10 seconds after crossing the center line (S204). It is assumed that, referring to the obtained accompanied operation information, the left blinker is turned on when passing the point Q1 (S205: YES), the rapid decelerating operation and the rapid accelerating operation are not performed (S206: NO, S207: NO), and the vehicle is traveling at the predetermined speed or lower (S208: YES). In this case, the operation to return to the original lane after avoiding the obstacle X is determined as appropriate and hence as safe driving, and no score is subtracted (S210).

Further, in another example, as shown in FIG. 5, it is assumed that the vehicle K is traveling a two-lane road R2 with a center line C2 drawn in yellow. The center line C2 drawn in yellow is a road marking line prohibiting crossing into the opposite lane for overtaking and corresponds to the "road marking line prohibiting deviation from the lane". There is an obstacle Y on the road R2, and a temporary road R3 for avoiding the obstacle Y is provided. The temporary road R3 is provided to cross the original center line C2, and the original center line C2 remains as it is without being erased. It is assumed that, as shown by a traveling trace T2, the vehicle K is traveled the temporary road R3. Note that here the obstacle Y is the "factor to be avoided in the vicinity of the vehicle", and the operation to cross the center line C2 corresponds to the "operation of the vehicle to be determined as dangerous driving in a normal time".

The vehicle K crosses the center line C2 at the point P2 (S101: YES). At this time, since there is the obstacle Y ahead on the lane which the vehicle K is traveling, the operation to cross the center line C2 is determined as the avoidance operation (S102: YES), and the crossing flag is set (S103). Further, when the vehicle passes a predetermined section before and after the operation to cross the center line C2 is detected (S104: YES), that is, 10 seconds elapse after the operation to cross the center line C2 is detected, there is obtained accompanied operation information related to the operation accompanying the operation to cross the center line C2 in a period from 10 seconds before crossing the center line C2 at the point P2 to 10 seconds after crossing the center line C2 (S105). It is assumed that, referring to the obtained accompanied operation information, the right blinker is not turned on three seconds before passing the point P2 (S106: NO), but the traveling trace T2 in a period from 10 seconds before passing the point P2 to 10 seconds after passing the point P2 and the road shape of the temporary road R3 match each other (S110: YES). In this case, the operation to cross the center line C2 avoiding the obstacle Y is determined as appropriate and hence as safe driving, and no score is subtracted (S111).

Further, in a state that the crossing flag is set (S201: YES), the vehicle K crosses the center line C2 again at the point Q2 (S202: YES). Further, when the vehicle passes the predetermined section before and after the operation to cross the center line C2 again is detected (S203: YES), that is, when 10 seconds elapse after the operation to cross the center line C2 again is detected, there is obtained accompanied operation information related to the operation accompanying the operation to cross the center line C2 in the period from 10 seconds before crossing the center line C2 at the point Q2 to 10 seconds after crossing the center line C2 (S204). It is assumed that, referring to the obtained accompanied operation information, the left blinker is not turned on when passing the point Q2 (S205: NO), but the traveling trace T2 in the period from 10 seconds before passing the point Q2 to 10 seconds after passing the point Q2 and the road shape of the temporary road R3 match each other (S209: YES). In this case, the operation to return to the original lane after avoiding the obstacle Y is determined as appropriate and hence as safe driving, and no score is subtracted (S210).

As described in detail above, when the road marking line prohibiting deviation from the lane is crossed (S101: YES), and the operation to cross the road marking line is determined as the avoidance operation to avoid the factor to be avoided in the vicinity of the vehicle (S102: YES), the driving support system 1 obtains information related to the operation accompanying the operation to cross the road marking line (S105). Based on the obtained information, when the operation of the vehicle is determined as an appropriate avoidance operation, the operation of the vehicle is determined not as dangerous driving (S111). Thus, the operation to cross the road marking line prohibiting deviation from the lane which is determined as dangerous driving in a normal time is determined not as dangerous driving when the operation is the appropriate avoidance operation performed for avoiding the factor to be avoided in the vicinity of the vehicle. Therefore, appropriate driving evaluation considering the situation surrounding the vehicle can be performed.

The accompanied operation information includes information related to the traveling trace of the vehicle in a predetermined section before and after an operation to cross the road marking line is detected. When the traveling trace and the road shape of the predetermined section match each other (S110: YES), the operation of the vehicle is determined as the appropriate avoidance operation. Thus, even when a temporary road or the like is made for avoiding a construction site or the like on the lane, and the road itself is modified, appropriate driving evaluation can be performed in consideration of the situation surrounding the vehicle.

The accompanied operation information includes information related to the direction indicator when the operation to cross the road marking line is performed. When the direction indicator is turned on when the operation to cross the road marking line is detected (S106: YES), the operation of the vehicle is determined as the appropriate avoidance operation, and thus appropriate driving evaluation considering the situation surrounding the vehicle can be performed.
Further, the accompanied operation information includes information related to the vehicle speed. When the rapid decelerating operation and the rapid accelerating operation are not performed (S107: NO, S108: NO), or when the vehicle travels at the predetermined speed or lower (S109: YES), the operation of the vehicle is determined as the appropriate avoidance operation, and thus appropriate driving evaluation considering the situation surrounding the vehicle can be performed.

Note that the control unit 10 in this embodiment forms an "operation detecting unit", an "avoidance determining unit", an "information obtaining unit", an "avoidance operation determining unit", and a "determining unit". Further, S101 in FIG. 2 corresponds to processing as a function of the "operation detecting unit", S102 corresponds to processing as a function of the "avoidance determining unit", S105 corresponds to processing as a function of the "information obtaining unit", S106 to S110 correspond to processing as a function of the "avoidance operation determining unit", and S111 corresponds to processing as a function of the "determining unit".

The present invention is not limited to the above-described embodiment, and can be implemented in various modes within the range not departing from the gist of the invention.

### (A) Modification example 1: determination processing of matching of the traveling trace and the road shape

In the above-described embodiment, when the blinker is not turned on (S106: NO), whether the traveling trace and the road shape match each other or not is determined (S110). In modification example 1, determination processing of whether the traveling trace and the road shape match each other or not (S110) is performed before the determination processing of whether the blinker is turned on or not (S106). That is, whether the traveling trace indicated by the traveling trace information and the road shape match each other or not is determined based on the accompanied operation information obtained in S105 in the above-described embodiment. When the traveling trace and the road shape match each other, the system proceeds to the processing in S110. When the traveling trace and the road shape do not match, the system proceeds to S106 in the above-described embodiment, and the processing of S106 to S112 except S110 is performed.

Modification example 1 assumes the case where a temporary road or the like is made for avoiding, for example, a construction site on a road, and the road itself is modified. In this case, since the road itself is modified, the operation to cross the line prohibiting deviation from the lane before being modified is not dangerous driving. Therefore, when the traveling trace and the road shape match each other, the operation to cross the line prohibiting deviation from the lane before being modified is considered as a normal operation rather than the avoidance operation even if there is an obstacle in the vicinity of the vehicle.

(B) Modification example 2: information related to the factor to be avoided.
In the above-described embodiment, the factor to be avoided is detected based on video information captured by the camera 90, but the system may be configured to obtain the factor from an information center or the like by communication so as to detect the factor. Further, when the factor to be avoided is obtained by communication so as to detect the factor, the system may be configured to obtain the factor to be avoided on a route to the destination so as to detect the factor.

Based on this, in modification example 2, after an affirmative determination is made in S 102 of the above-described embodiment, it is determined whether information related to the detected factor to be avoided is obtained in advance or not. When the information related to the factor to be avoided is not obtained, a suddenness flag is set. When the information related to the factor to be avoided is obtained in advance, the suddenness flag is not set. A determination of whether the factor to be avoided is obtained in advance or not may be determined based on the distance between the factor to be avoided and the vehicle at the time at which the factor to be avoided is detected. That is, when the distance between the factor to be avoided and the vehicle at the time at which the factor to be avoided is detected is equal to or shorter than a predetermined distance (100 m for example), it is determined that the information related to the factor to be avoided is not obtained in advance. In addition, the predetermined distance may be a predetermined section before crossing the road marking line prohibiting deviation from the lane.
Further, the determination here may be performed by whether the factor to be avoided is detected or not when entering a predetermined section before the operation to cross the road marking line prohibiting deviation from the lane is detected. That is, when the factor to be avoided is not detected when entering the predetermined section before the operation to cross the road marking line prohibiting deviation from the lane is detected, it is determined that the information related to the factor to be avoided is not obtained in advance.

For example, when the factor to be avoided is a construction site, information can be obtained in advance from an information center or the like. In such a case, the driver is already aware that he or she is going to drive avoiding the factor to be avoided, here the construction site. On the other hand, when the factor to be avoided is a fallen object and this object suddenly appears ahead on the lane, the driver must perform the operation to instantly avoid the unexpected factor to be avoided, here the fallen object.

When the suddenness flag is set in view of such a difference in the surrounding situation, processing different from the case where the suddenness flag is not set is performed. Specifically, S105 to S107 are skipped, and whether the operation of the vehicle is the appropriate avoidance operation or not is determined only based on whether the vehicle speed is equal to or lower than the predetermined speed (S109).
With such a structure, appropriate driving evaluation considering the situation surrounding the vehicle can be performed.

### (C) Information related to the vehicle speed

In the above-described embodiment, it is determined that the rapid decelerating operation is performed when the speed reduction ratio is equal to or higher than the reference value, but the system may be configured to determine whether the rapid decelerating operation is performed or not based on a change ratio of the amount of depressing the brake pedal detected by the brake sensor 82. Further, it is determined that the rapid accelerating operation is performed when the speed increase ratio is equal to or higher than the reference value, but the system may be configured to determine whether the rapid accelerating operation is performed or not based on a change ratio of the amount of depressing the accelerator pedal detected by the accelerator sensor 81.

### (D) Method of using determination results

In the above-described embodiment, the driving evaluation score is calculated by subtraction from the preset base score when the determination as dangerous driving is made. Instead of this, the driving evaluation score may be calculated by a method of adding scores when the determination as safe driving is made so as to perform driving evaluation.
Further, regarding the driving evaluation result, the system is configured to give a warning if the driving evaluation score falls below the reference score when the driving is finished. Besides this, a warning may be given in real time when dangerous driving is performed. The system may also be configured to store position coordinates of a point where a driving operation determined as dangerous driving is performed, and to notify the driver of information that, when passing this point again, this is the point where dangerous driving was performed, so as to call attention. Further, the driving evaluation result may be transmitted to an information center to rank the driving evaluation result with reference to driving information of other drivers.

### (E) The road marking line prohibiting deviation from a lane

The road marking line prohibiting deviation from a lane refers to, as described above, a lane border line prohibiting a lane change and a center line prohibiting crossing into the opposite lane for overtaking. This road marking line is drawn on a road surface in yellow. There may be a white line drawn in parallel right beside the yellow line drawn on the road surface. In this case, deviation from the lane from the white line side is allowed. Therefore, when the yellow line is crossed from the white line side, it is assumed that the road marking line prohibiting deviation from the lane is not crossed. On the other hand, when the yellow line is crossed from the yellow line side, it is assumed that the road marking line prohibiting deviation from the lane is crossed.

### (F) Driving support system

In the above-described embodiment, the on-vehicle navigation device constitutes the driving support system. However, traveling information of the vehicle may be transmitted to an information center, and the above-described processing may be performed in the driving support center. In other words, the information center may constitute the driving support system.
A driving support system comprises an operation detecting unit detecting an operation of a vehicle which is determined as dangerous driving during a normal time; an avoidance determining unit determining whether or not the operation of the vehicle detected by the operation detecting unit is an avoidance operation to avoid a factor to be avoided in the vicinity of the vehicle; an information obtaining unit obtaining information related to an operation accompanying the operation of the vehicle when the operation of the vehicle is determined as the avoidance operation; an avoidance operation determining unit determining whether the operation of the vehicle is the appropriate avoidance operation or not based on the information related to the operation accompanying the operation of the vehicle; and a determining unit determining that the operation of the vehicle is not dangerous driving when the operation of the vehicle is determined as the appropriate avoidance operation.

## Claims

1. A driving support system (1), comprising:
an operation detecting unit (10) adapted to detect an operation of a vehicle which is determined as dangerous driving during a normal time;
an avoidance determining unit (10) adapted to determine whether or not the operation of the vehicle detected by the operation detecting unit is an avoidance operation to avoid a factor to be avoided in the vicinity of the vehicle;
an information obtaining unit (10) adapted to obtain information related to an operation accompanying the operation of the vehicle when the operation of the vehicle is determined as the avoidance operation;
an avoidance operation determining unit (10) adapted to determine whether the operation of the vehicle is the appropriate avoidance operation or not based on the information related to the operation accompanying the operation of the vehicle; and
a determining unit (10) adapted to determine that the operation of the vehicle is not dangerous driving when the operation of the vehicle is determined as the appropriate avoidance operation.

2. The driving support system (1) according to claim 1, wherein
the operation of the vehicle determined as dangerous driving during a normal time is an operation to cross a road marking line prohibiting deviation from a lane.

3. The driving support system (1) according to claim 2, wherein
the information related to the operation accompanying the operation of the vehicle is information related to a traveling trace of the vehicle in a predetermined section before and after the operation to cross the road marking line is detected; and
the avoidance operation determining unit (10) is adapted to determine the operation of the vehicle as the appropriate avoidance operation when the traveling trace indicated by the information related to the traveling trace of the vehicle matches a road shape of the predetermined section.

4. The driving support system (1) according to claim 2 or 3, wherein
the information related to the operation accompanying the operation of the vehicle is information related to a direction indicator when the operation to cross the road marking line is detected, and
the avoidance operation determining unit (10) is adapted to determine that the operation of the vehicle is the appropriate avoidance operation when the information related to the direction indicator indicates that the direction indicator is turned on.

5. The driving support system (1) according to any one of claims 2 to 4, wherein
the information related to the operation accompanying the operation of the vehicle is information related to a speed of the vehicle when the operation to cross the road marking line is detected, and
the avoidance operation determining unit (10) is adapted to determine that the operation of the vehicle is the appropriate avoidance operation when a value indicated by the information related to the speed of the vehicle satisfies a predetermined reference.

6. A program causing a computer to function as:
an operation detecting unit adapted to detect an operation of a vehicle which is determined as dangerous driving during a normal time (S101);
an avoidance determining unit adapted to determine whether or not the operation of the vehicle detected by the operation detecting unit is an avoidance operation to avoid a factor to be avoided in the vicinity of the vehicle (S102);
an information obtaining unit adapted to obtain information related to an operation accompanying the operation of the vehicle when the operation of the vehicle is determined as the avoidance operation (S105);
an avoidance operation determining unit adapted to determine whether the operation of the vehicle is the appropriate avoidance operation or not based on the information related to the operation accompanying the operation of the vehicle (S106 to S110); and
a determining unit adapted to determine that the operation of the vehicle is not dangerous driving when the operation of the vehicle is determined as the appropriate avoidance operation (S111).

7. A method comprising:
detecting (S101) an operation of a vehicle which is determined as dangerous driving during a normal time;
determining (S102) whether or not the operation of the vehicle detected by the operation detecting unit is an avoidance operation to avoid a factor to be avoided in the vicinity of the vehicle;
obtaining (S105) information related to an operation accompanying the operation of the vehicle when the operation of the vehicle is determined as the avoidance operation;
determining (S106 to S 110) whether the operation of the vehicle is the appropriate avoidance operation or not based on the information related to the operation accompanying the operation of the vehicle; and
determining (S111) that the operation of the vehicle is not dangerous driving when the operation of the vehicle is determined as the appropriate avoidance operation.

8. A computer program product including a program for a processing device, comprising software code portions for performing the steps of claim 7 when the program is run on the processing device.

9. The computer program product according to claim 8, wherein the computer program product comprises a computer-readable medium on which the software code portions are stored.

10. The computer program product according to claim 8, wherein the program is directly loadable into an internal memory of the processing device.
